# EUROPEAN PATENT APPLICATION

(11) **EP 4 362 141 A1**
(43) Date of publication of application: **01.05.2024**
(21) Application number: 22827992.3
(22) Date of filing: 23.03.2022
(51) Int. Cl.: H01M 4/70, H01M 10/052, H01M 10/0562, H01M 10/0585

(54) **BATTERY MANUFACTURING METHOD AND BATTERY**

(30) Priority: 21.06.2021 JP 2021102246
(71) Applicant: Panasonic Intellectual Property Management Co., Ltd., Kadoma-shi, Osaka 571-0057 (JP)
(72) Inventor: UCHIDA, Noriyuki, Tokyo 103-0022 (JP); MORIOKA, Kazuhiro, Tokyo 103-0022 (JP)
(74) Representative: Grünecker Patent- und Rechtsanwälte PartG mbB
(86) International application number: PCT/JP2022/013354
(87) International publication number: WO 2022/270072

(57) **Abstract**

A method for manufacturing a battery includes: a cutting step of forming a cut surface by cutting a laminate having a battery cell having a structure in which an electrode layer, a solid electrolyte layer, and a counter electrode layer are laminated in this order so as to collectively cut the electrode layer, the solid electrolyte layer, and the counter electrode layer; and a cleaning step of removing a deposit adhering to the cut surface, the deposit being generated by cutting the laminate in the cutting step.

## Description

### Technical Field

The present disclosure relates to a method for manufacturing a battery and a battery.

### Background Art

Patent Literature 1 discloses a battery in which a negative electrode having a negative electrode active material layer formed on a negative electrode current collector and a positive electrode having a positive electrode active material layer formed on a positive electrode current collector are laminated with at least a non-aqueous electrolyte interposed therebetween, and in which the electrodes are laminated such that burrs present at the peripheral edges of the negative electrode current collector and the positive electrode current collector protrude in substantially the same direction.

Patent Literature 2 discloses a cleaning device that removes surface deposits of a long metal foil that is slit and conveyed by sandwiching the long metal foil from both surfaces with an adhesive roll having a length larger than the full width of the long metal foil, so that the deposits on both surfaces of the long metal foil adhere to the surface of the adhesive roll.

### Citation List

### Patent Literature

PTL 1: Japanese Unexamined Patent Application Publication No. 2001-203001
PTL 2: Japanese Unexamined Patent Application Publication No. 2013-188685

### Summary of Invention

### Technical Problem

In the related art, it is desired to further improve reliability of the battery.

For example, in a battery having a solid electrolyte layer arranged between a positive electrode layer and a negative electrode layer, short-circuiting is likely to occur at end faces of the battery. Particularly when the solid electrolyte layer is thinned to increase the capacity density, short-circuiting is more likely to occur.

Accordingly, the present disclosure provides a method for manufacturing a battery and a battery with high reliability.

### Solution to Problem

A method for manufacturing a battery according to an aspect of the present disclosure includes: a cutting step of forming a cut surface by cutting a laminate having a battery cell having a structure in which an electrode layer, a solid electrolyte layer, and a counter electrode layer are laminated in this order so as to collectively cut the electrode layer, the solid electrolyte layer, and the counter electrode layer; and a cleaning step of removing a deposit adhering to the cut surface, the deposit being generated by cutting the laminate in the cutting step.

A battery according to an aspect of the present disclosure includes: a battery cell having a structure in which an electrode layer, a solid electrolyte layer, and a counter electrode layer are laminated in this order, in which the electrode layer includes an electrode current collector and an electrode active material layer positioned between the electrode current collector and the solid electrolyte layer, and a plurality of linear patterns are provided on a side surface of the electrode current collector, the patterns extending in a direction inclined with respect to a laminating direction of the battery cell when the side surface of the electrode current collector is seen in plan view.

### Advantageous Effects of Invention

According to the present disclosure, a method for manufacturing a battery and a battery with high reliability can be provided.

### Brief Description of Drawings

[Fig. 1] Fig. 1 is a side view and a top view of a battery according to an embodiment.
[Fig. 2] Fig. 2 is an enlarged side view of a region II in Fig. 1.
[Fig. 3] Fig. 3 is a flowchart illustrating an example of a method for manufacturing a battery according to the embodiment.
[Fig. 4] Fig. 4 is a perspective view for explaining a lamination step and a cutting step.

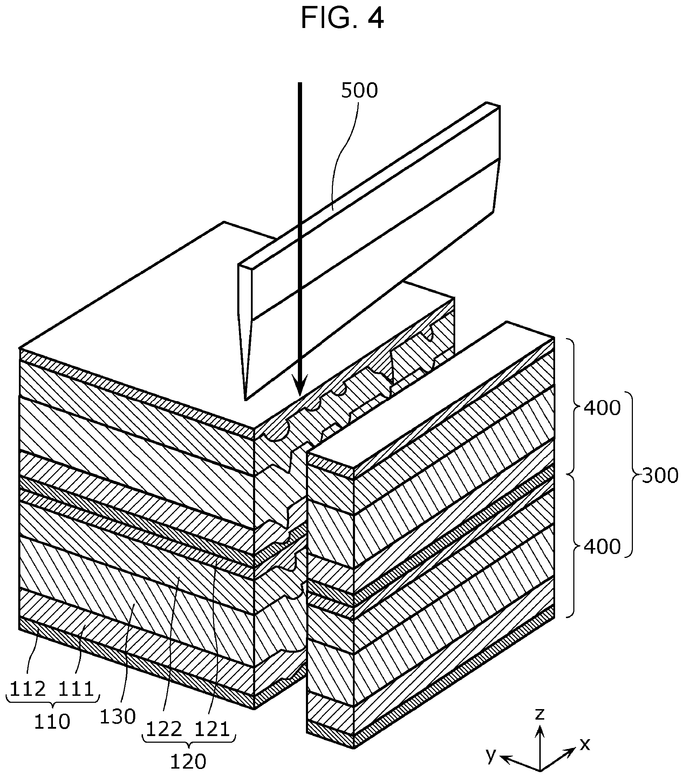

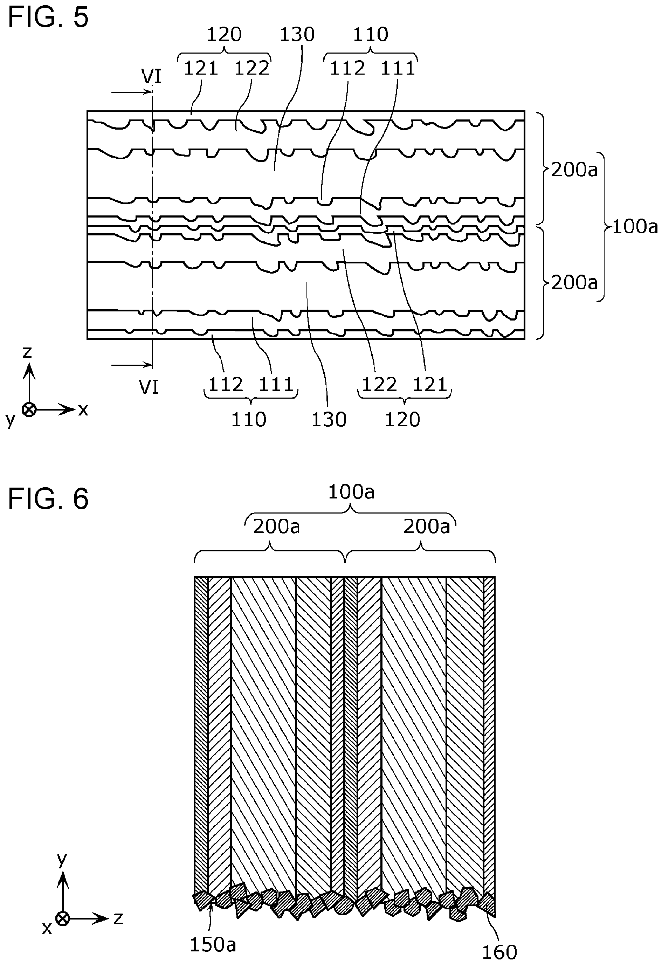

[Fig. 4] Fig. 5 is a plan view of a laminate formed in the cutting step.
[Fig. 6] Fig. 6 is a sectional view of the laminate formed in the cutting step.

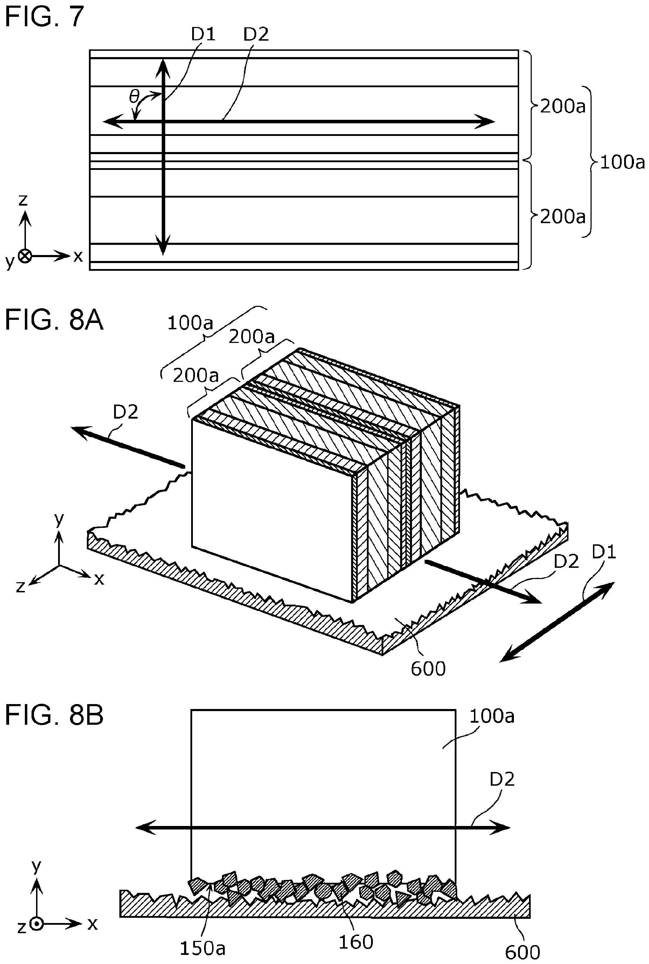

[Fig. 7] Fig. 7 is a diagram for explaining a polishing direction in a polishing step.
[Fig. 8A] Fig. 8A is a perspective view for explaining an example of a polishing method in the polishing step.
[Fig. 8B] Fig. 8B is a top view for explaining an example of the polishing method in the polishing step.

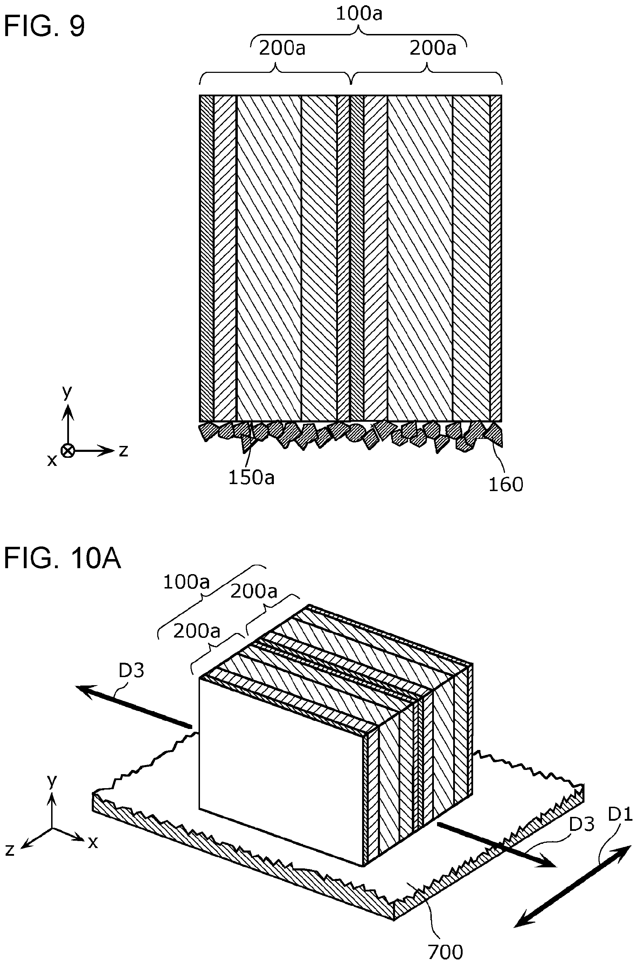

[Fig. 9] Fig. 9 is a sectional view illustrating a state of deposit after the polishing step.
[Fig. 10A] Fig. 10A is a perspective view for explaining an example of a cleaning method in a first removal step.

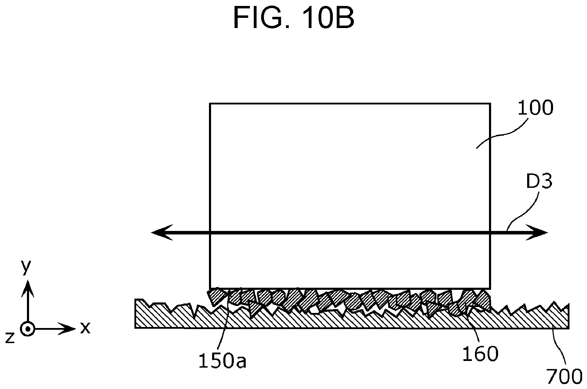

[Fig. 10B] Fig. 10B is a top view for explaining an example of the cleaning method in the first removal step.

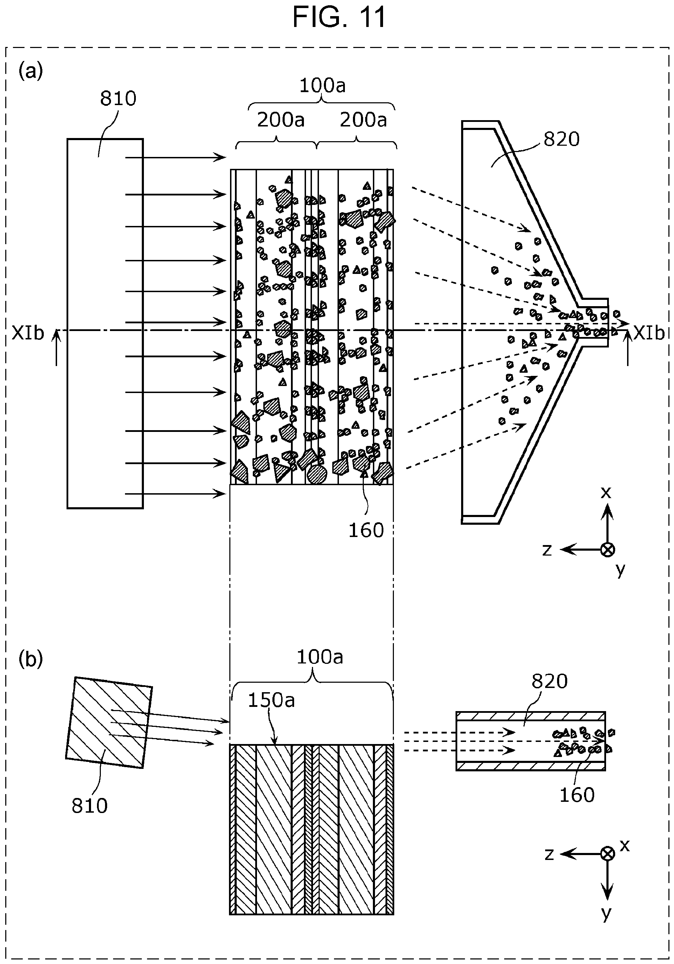

[Fig. 11] Fig. 11 is a plan view and a sectional view for explaining a second removal step.

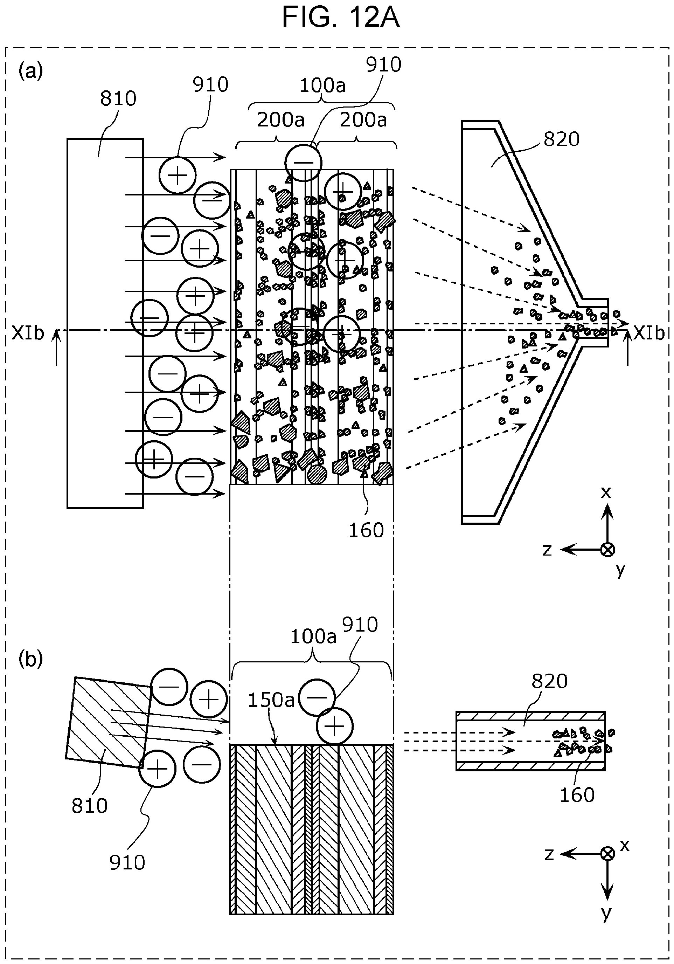

[Fig. 12A] Fig. 12A is a plan view and a sectional view for explaining a state of blowing gas containing ion gas in the second removal step.

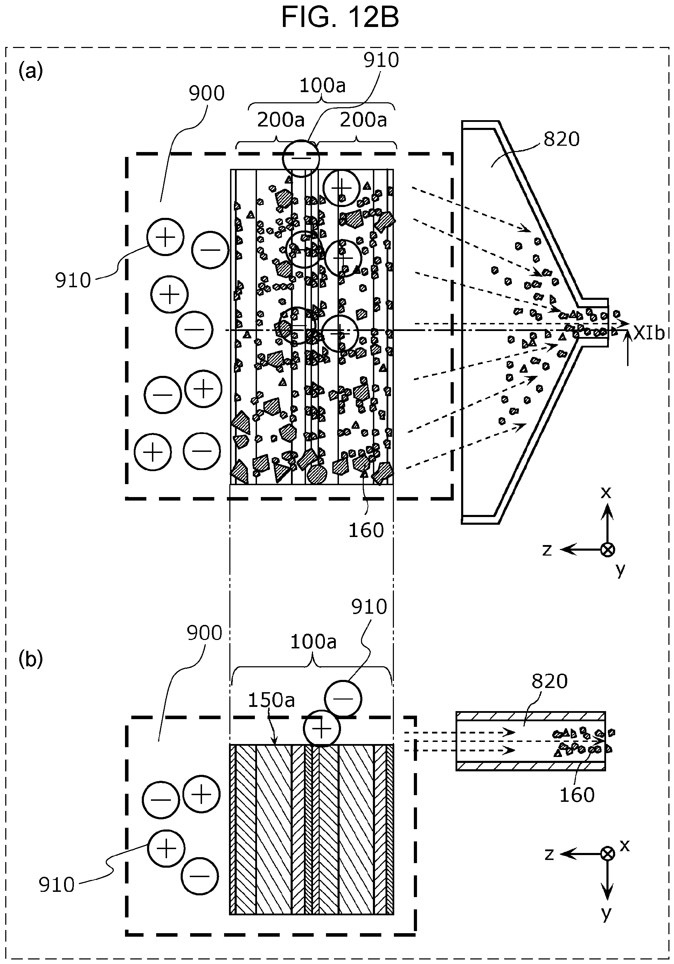

[Fig. 12B] Fig. 12B is a plan view and a sectional view for explaining an ion gas space in the second removal step.

### Description of Embodiments

### (Findings on which the present disclosure is based)

Suppression of short-circuiting is one of the important qualities in improving the reliability of a battery including a battery cell having a positive electrode layer, a negative electrode layer, and a solid electrolyte layer positioned between the positive electrode layer and the negative electrode layer. In order to suppress short-circuiting, an end portion of a battery is cut off in a battery manufacturing process, for example. Accordingly, short-circuiting can be suppressed by uniformizing the cross-sectional shape of each layer in the battery cell and evenly separating the positive electrode layer and the negative electrode layer as far away from each other as possible. In addition, such short-circuiting can be suppressed by removing a current collector, an active material, and the like adhering to the end portion of the battery. Furthermore, by cutting the end portion of the battery, the end portion of the battery cell, which does not easily function as the battery, can be removed at the time of battery manufacture. Thus, the capacity density of the battery can also be increased. Since the size of the battery can be easily adjusted by cutting, the capacity accuracy of the battery can be improved.

However, in the process of cutting the battery into a predetermined size, fine conductive paths are formed due to cutting powder of the conductive current collector and the active material layer and foreign matter adhered during the cutting process. As a result, the positive and negative electrodes may become conductive. Therefore, even for a battery manufactured through a cutting process, it is desirable to suppress deterioration in reliability due to short-circuiting.

Therefore, the present disclosure provides a method for manufacturing a battery and a battery with high reliability even when the battery is manufactured through a cutting process.

An aspect of the present disclosure is outlined as follows.

A method for manufacturing a battery according to an aspect of the present disclosure includes: a cutting step of forming a cut surface by cutting a laminate having a battery cell having a structure in which an electrode layer, a solid electrolyte layer, and a counter electrode layer are laminated in this order so as to collectively cut the electrode layer, the solid electrolyte layer, and the counter electrode layer; and a cleaning step of removing a deposit adhering to the cut surface, the deposit being generated by cutting the laminate in the cutting step.

The deposit generated on the cut surface in the cutting step is conductive as described above and thus cause short-circuiting. However, by removing the deposit in the cleaning step, the occurrence of short-circuiting can be suppressed. Therefore, according to this aspect, a highly reliable battery can be manufactured.

For example, the method for manufacturing may further include: a polishing step of polishing the cut surface before the cleaning step.

The deposit generated by cutting the laminate tends to bite into the laminate at the cut surface and are often difficult to remove. By polishing the cut surface, the deposit that has bitten into the laminate can be ripped from the cut surface, making it easier to remove the deposit in the cleaning step. Therefore, the reliability of the battery manufactured can be further improved.

For example, in the polishing step, the cut surface may be polished along a direction perpendicular to the laminating direction of the laminate.

Accordingly, frictional force generated by polishing does not act in a laminating direction of the laminate, such that the layers of the laminate are peeled off at the cut surface. Therefore, damage to the laminate during polishing can be suppressed, and the reliability of the battery manufactured can be further improved.

For example, the cleaning step may include a first removal step of removing the deposit in a contact manner.

Thus, by bringing a removal member into contact with the cut surface to remove the deposit, high removal efficiency can be achieved.

For example, the first removal step may include wiping off the deposit adhering to the cut surface.

Accordingly, a wiping member for wiping off adheres to and collects the deposit, thereby efficiently removing the deposit adhering to the cut surface.

For example, in the first removal step, the deposit adhering to the cut surface may be wiped off using a non-woven fabric.

As a result, the deposit is entangled in a non-woven fabric, and thus the deposit is easily captured and held by the non-woven fabric. Therefore, the deposit adhering to the cut surface are removed more efficiently.

For example, the first removal step may include sticking an adhesive member to the cut surface and peeling off the adhesive member so that the deposit adheres to the adhesive member.

Accordingly, the deposit can be removed simply by attaching and peeling off the adhesive member without sliding it against the cut surface. Therefore, damage to the laminate can be suppressed during removal of the deposit.

For example, the cleaning step may include a second removal step including at least one of blowing gas onto the cut surface and sucking the deposit adhering to the cut surface.

In the second removal step, a static eliminator may blow an ion-containing gas and may suck in the ion-containing gas in a space around the battery.

The ionized gas neutralizes charges between the cut surface and the deposit, reduces the adhesion, and removes the deposit without bringing an object into contact with the cut surface. The damage to the laminate can be suppressed during removal of the deposit.

A battery according to an aspect of the present disclosure includes: a battery cell having a structure in which an electrode layer, a solid electrolyte layer, and a counter electrode layer are laminated in this order, in which the electrode layer includes an electrode current collector and an electrode active material layer positioned between the electrode current collector and the solid electrolyte layer, and a plurality of linear patterns are provided on a side surface of the electrode current collector, the patterns extending in a direction inclined with respect to a laminating direction of the battery cell when the side surface of the electrode current collector is seen in plan view.

For example, when the side surface of the battery is polished, a plurality of linear patterns are formed by the polishing. Since the plurality of linear patterns are formed along the polishing direction during polishing, when the plurality of linear patterns are tilted with respect to the laminating direction of the battery cells, the polishing direction is also tilted with respect to the laminating direction. Therefore, the frictional force generated by polishing is applied in a direction tilted with respect to the laminating direction, and is less likely to be applied in the laminating direction of the laminate, which is the direction in which each layer of the laminate is peeled off at the cut surface. Therefore, breakage during manufacture of the battery is suppressed. Thus, a highly reliable battery can be realized.

For example, when the side surface of the electrode current collector is seen in plan view, an angle formed by the laminating direction of the battery cell and an extending direction of the plurality of linear patterns may be greater than or equal to 45° and less than or equal to 90°.

Accordingly, more than half of the frictional force generated by the polishing described above is not applied in the laminating direction of the laminate, which is the direction in which each layer of the laminate is peeled off at the cut surface. Therefore, the breakage during manufacture of the battery is further suppressed.

For example, the plurality of linear patterns may extend in a direction perpendicular to the laminating direction of the battery cell when the side surface of the electrode current collector is seen in plan view.

Thus, the frictional force generated by the polishing described above is applied in a direction perpendicular to the laminating direction, and is not applied in the laminating direction of the laminate, which is the direction in which each layer of the laminate is peeled off at the cut surface. Therefore, the breakage during manufacture of the battery is further suppressed.

For example, the plurality of linear patterns may be polishing patterns.

Accordingly, since the side surface of the battery is polished, even when deposit adheres to the side surface of the battery during manufacture, the deposit is scraped off by polishing, making it easier to remove the deposit. Thus, a more highly reliable battery can be realized.

Hereinafter, embodiments of the present disclosure will be described with reference to the drawings.

The embodiments described below all illustrate comprehensive or specific examples. The numerals, shapes, materials, constituent elements, the arrangement and connections of the constituent elements, steps, order of steps, and the like discussed in the following embodiments are only exemplary and are not construed to limit the present disclosure. Among the constituent elements in the following embodiments, constituent elements not described in an independent claim will be described as arbitrary constituent elements.

The drawings are schematic and not necessarily to scale. Therefore, for example, scales and the like do not necessarily match in each drawing. In addition, in each drawing, substantially the same configurations are denoted by the same reference numerals to eliminate or simplify overlapped description.

In the present specification, terms indicating the relationship between elements such as parallel and perpendicular, terms indicating the shape of elements such as a rectangle, and numerical ranges are expressions including substantially the same ranges, for example, differences of about several percent, rather than expressions indicating strict meanings only.

In the present specification and drawings, an x-axis, a y-axis, and a z-axis represent three axes of a three-dimensional orthogonal coordinate system. When a battery has a rectangular shape in plan view, the x-axis and the y-axis correspond to directions parallel to a first side of the rectangle and to a second side orthogonal to the first side, respectively. The z-axis corresponds to the laminating direction of each layer of the laminate and the battery.

In the present specification, the "laminating direction" corresponds to a direction normal to principal surfaces of a current collector and an active material layer. Further, in the present specification, "plan view" means a view as seen from a direction perpendicular to the principal surface of the battery or laminate unless otherwise specified. It should be noted that "a plan view of a certain surface" such as "a plan view of a cut surface" means a view of the "certain surface" as seen from the front.

Also, in the present specification, the terms "above" and "below" do not refer to upward (vertically upward) and downward (vertically downward) directions in absolute spatial recognition, but rather used as terms defined by a relative positional relationship based on a laminating order in a laminated structure. In addition, the terms "above" and "below" are applied not only to a case where two constituent elements are spaced apart from each other with another constituent element between the two constituent elements but also to a case where two constituent elements are arranged in close contact with each other. In the following description, it is assumed that the negative side of the z-axis is "below" or "lower side" and the positive side of the z-axis is "above" or "upper side" unless otherwise specified.

### (Embodiment)

### [Configuration]

First, a configuration of a battery according to an embodiment of the present disclosure will be described.

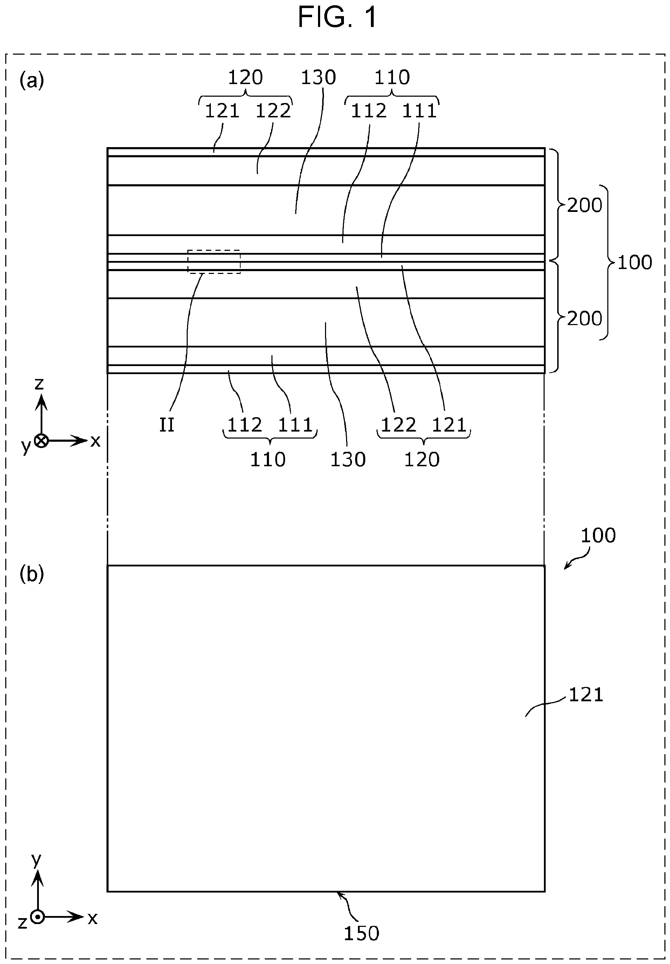

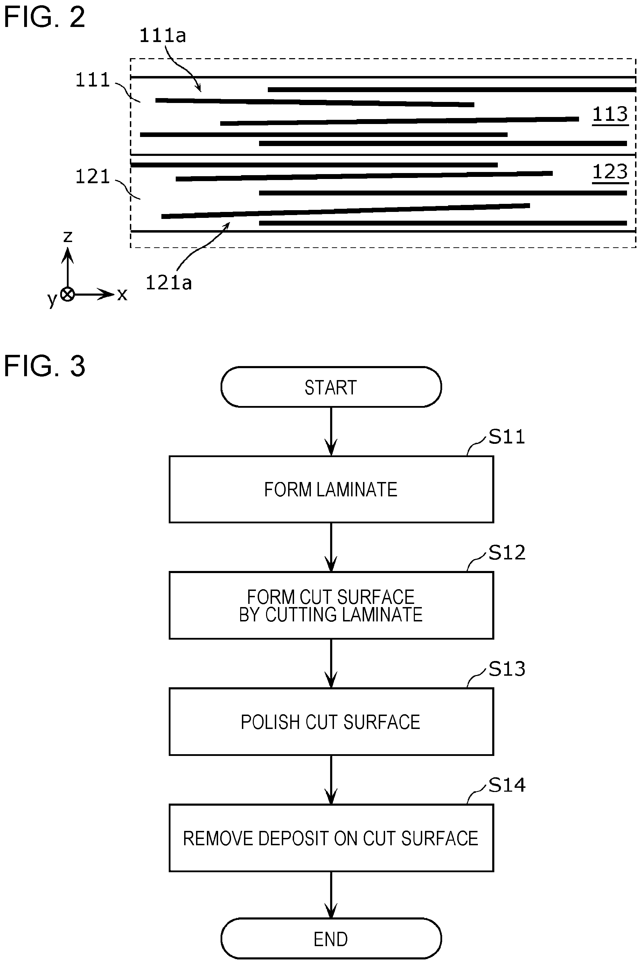

Fig. 1 is a side view and a top view of a battery 100 according to this embodiment. To be more specific, Fig. 1(a) is a plan view of a side surface 150 of the battery 100 as seen from the front. Fig. 1(b) is a plan view of a principal surface of the battery 100 as seen from above, that is, as seen along a laminating direction. Fig. 2 is an enlarged side view of a region II in Fig. 1. In Fig. 1, illustration of a polishing pattern 111a and a polishing pattern 121a illustrated in Fig. 2 is omitted.

The battery 100 includes a plurality of battery cells 200. The battery 100 is an all-solid-state battery, for example.

As illustrated in Fig. 1, the battery 100 has a rectangular shape, for example, in plan view. The shape of the battery 100 is, for example, a flat rectangular parallelepiped shape. Here, the term "flat" means that a thickness (that is, a length in the z-axis direction) is shorter than each side (that is, a length in each of the x-axis and y-axis directions) or the maximum width of the principal surface. The shape of the battery 100 in plan view may be any other quadrangular shape such as a square, parallelogram or rhombus, or may be any other polygonal shape such as a hexagon or octagon. The battery 100 has the rectangular parallelepiped shape, but may have any other shape such as a cubic shape, a truncated square pyramid shape or a polygonal columnar shape. In the present specification, the thickness of each layer is exaggerated in order to make a layer structure of the battery 100 easier to understand in side views such as Fig. 1 as well as in perspective views and sectional views to be described later.

The battery cell 200 is a battery of a minimum configuration, and is also referred to as a unit cell. A plurality of battery cells 200 are laminated so as to be electrically connected in series. In this embodiment, all battery cells 200 included in battery 100 are electrically connected in series. In the example illustrated in the drawing, the number of the battery cells 200 included in the battery 100 is two, but the present disclosure is not limited thereto. For example, the number of the battery cells 200 included in the battery 100 may be one, or three or more.

The plurality of battery cells 200 each include an electrode layer 110, a counter electrode layer 120, and a solid electrolyte layer 130 disposed between the electrode layer 110 and the counter electrode layer 120. Therefore, the plurality of battery cells 200 each have a structure in which the electrode layer 110, the solid electrolyte layer 130, and the counter electrode layer 120 are laminated in this order. The electrode layer 110 has an electrode current collector 111 and an electrode active material layer 112. The counter electrode layer 120 has a counter electrode current collector 121 and a counter electrode active material layer 122. In each of the plurality of battery cells 200, the electrode current collector 111, the electrode active material layer 112, the solid electrolyte layer 130, the counter electrode active material layer 122, and the counter electrode current collector 121 are laminated in this order along the z-axis.

The electrode layer 110 is one of a positive electrode layer and a negative electrode layer of the battery cell 200. The counter electrode layer 120 is the other of the positive electrode layer and the negative electrode layer of the battery cell 200. The following description is given of, as an example, a case where the electrode layer 110 is the negative electrode layer and the counter electrode layer 120 is the positive electrode layer. The electrode layer 110 may be the positive electrode layer and the counter electrode layer 120 may be the negative electrode layer.

The plurality of battery cells 200 have substantially the same configuration. In two adjacent battery cells 200, the layers included in the battery cells 200 are arranged in the same order. That is, the plurality of battery cells 200 are laminated side by side along the z-axis so that the layers included in the battery cells 200 are arranged in the same order. Therefore, the plurality of battery cells 200 are laminated such that different polarities of the adjacent battery cells 200 are connected to each other. The electrode current collector 111 in one of the adjacent battery cells 200 is electrically connected to the counter electrode current collector 121 in the other battery cell 200 through an adhesive layer (not illustrated), for example, which is made of a conductive adhesive or the like. The electrode current collector 111 in one of the adjacent battery cells 200 and the counter electrode current collector 121 in the other battery cell 200 may be in direct contact with each other. Alternatively, the adjacent battery cells 200 may share one electrode current collector 111 or one counter electrode current collector 121. That is, in the battery 100, the electrode active material layer 112 and the counter electrode active material layer 122 may be in contact with both principal surfaces of one electrode current collector 111, respectively, or the electrode active material layer 112 and the counter electrode active material layer 122 may be in contact with both principal surfaces of one counter electrode current collector 121.

The solid electrolyte layer 130 is disposed between the electrode active material layer 112 and the counter electrode active material layer 122. The solid electrolyte layer 130 is in contact with the electrode active material layer 112 and the counter electrode active material layer 122. The solid electrolyte layer 130 has a thickness of, for example, greater than or equal to 5 µm and less than or equal to 150 µm.

The solid electrolyte layer 130 contains at least a solid electrolyte and may contain a binder material as needed. The solid electrolyte layer 130 may contain a solid electrolyte having lithium ion conductivity.

As the solid electrolyte, a known material can be used, such as a lithium ion conductor, a sodium ion conductor or a magnesium ion conductor. A solid electrolyte material such as a sulfide solid electrolyte, a halogen-based solid electrolyte or an oxide solid electrolyte is used as the solid electrolyte. As the sulfide solid electrolyte, a mixture of lithium sulfide (Li₂S) and phosphorus pentasulfide (P₂S₅) is used, for example. As the sulfide solid electrolyte, a sulfide such as Li₂S-SiS₂, Li₂S-B₂S₃ or Li₂S-GeS₂ may be used. Alternatively, a sulfide obtained by adding at least one of Li₃N, LiCl, LiBr, Li₃PO₄ and Li₄SiO₄ as an additive to the above sulfide may be used.

As the oxide solid electrolyte, Li₇La₃Zr₂O₁₂ (LLZ), Li_{1.3}Al_{0.3}Ti_{1.7}(PO₄)₃(LATP), (La,Li)TiO₃(LLTO) or the like is used, for example.

As the binder material, elastomers are used, for example, and an organic compound such as polyvinylidene fluoride, acrylic resin or cellulose resin may be used.

The electrode active material layer 112 is in contact with the principal surface of the electrode current collector 111. Note that the electrode current collector 111 may include a current collector layer which is a layer containing a conductive material and is provided in a portion in contact with the electrode active material layer 112.

The counter electrode active material layer 122 is in contact with the principal surface of the counter electrode current collector 121. Note that the counter electrode current collector 121 may include a current collector layer which is a layer containing a conductive material and is provided in a portion in contact with the counter electrode active material layer 122.

As materials for the electrode current collector 111 and the counter electrode current collector 121, known materials can be used. For example, as the materials for the electrode current collector 111 and the counter electrode current collector 121, a foil-shaped body, a plate-like body, a meshed body and the like are used, which are made of copper, aluminum, nickel, iron, stainless steel, platinum, gold, or alloys of two or more thereof. The electrode current collector 111 and the counter electrode current collector 121 each have a thickness of, for example, greater than or equal to 5 µm and less than or equal to 100 µm, but the present disclosure is not limited thereto.

The electrode layer 110 does not have to include the electrode current collector 111. For example, the current collector of the electrode layer 110 or the counter electrode layer 120 of the other battery cell 200, a lead terminal, the adhesive layer with the other battery cell 200 or the like may function as the current collector of the electrode active material layer 112. That is, the electrode layer 110 may include only the electrode active material layer 112 out of the electrode current collector 111 and the electrode active material layer 112. Likewise, the counter electrode layer 120 does not have to include the counter electrode current collector 121. For example, the current collector of the electrode layer 110 or the counter electrode layer 120 of the other battery cell 200, a lead terminal, the adhesive layer with the other battery cell 200 or the like may function as the current collector of the counter electrode active material layer 122. That is, the counter electrode layer 120 may include only the counter electrode active material layer 122 out of the counter electrode current collector 121 and the counter electrode active material layer 122.

The electrode active material layer 112 is disposed on the principal surface of the electrode current collector 111 on the counter electrode layer 120 side. The electrode active material layer 112 is disposed so as to face the counter electrode active material layer 122. The electrode active material layer 112 has a thickness of, for example, greater than or equal to 5 µm and less than or equal to 300 µm, but the present disclosure is not limited thereto.

The electrode active material layer 112 contains at least a negative electrode active material, and may contain at least one of a solid electrolyte, a conductive assistant, and a binder material as necessary. The negative electrode active material may be a known material capable of accepting and releasing (inserting and desorbing or dissolving and depositing) lithium ions, sodium ions, or magnesium ions. When the negative electrode active material is a material capable of desorbing and inserting lithium ions, a carbon material such as natural graphite, artificial graphite, graphite carbon fiber or resin heat-treated carbon, metallic lithium, lithium alloys, an oxide of lithium and a transition metal element or the like is used.

As the solid electrolyte, the solid electrolyte material described above can be used. A conductive material such as acetylene black, carbon black, graphite, and carbon fiber, for example, is used as the conductive assistant. As the binder material, the binder material described above can be used.

The electrode active material layer 112 is produced by coating the principal surface of the electrode current collector 111 with a paste-like paint in which a material contained in the electrode active material layer 112 is kneaded together with a solvent and then drying the paint. In order to increase the density of the electrode active material layer 112, the electrode layer 110 (also referred to as an electrode plate) including the electrode active material layer 112 and the electrode current collector 111 may be pressed after drying.

The counter electrode active material layer 122 is disposed on the principal surface of the counter electrode current collector 121 on the electrode layer 110 side. The counter electrode active material layer 122 has a thickness of, for example, greater than or equal to 5 µm and less than or equal to 300 µm, but the present disclosure is not limited thereto.

The counter electrode active material layer 122 contains at least a positive electrode active material and may contain at least one of a solid electrolyte, a conductive assistant, and a binder material, as needed.

The positive electrode active material may be a known material capable of accepting and releasing (inserting and desorbing or dissolving and depositing) lithium ions, sodium ions, or magnesium ions. When the positive electrode active material is a material capable of desorbing and inserting lithium ions, lithium cobalt oxide composite oxide (LCO), lithium nickel oxide composite oxide (LNO), lithium manganese oxide composite oxide (LMO), lithium-manganese-nickel composite oxide (LMNO), lithium-manganese-cobalt composite oxide (LMCO), lithium-nickel-cobalt composite oxide (LNCO), lithium-nickel-manganese-cobalt composite oxide (LNMCO) or the like is used, for example.

As the solid electrolyte, the solid electrolyte material described above can be used. The conductive material described above can be used as the conductive assistant. As the binder material, the binder material described above can be used.

The counter electrode active material layer 122 is produced by coating the principal surface of the counter electrode current collector 121 with a paste-like paint in which a material contained in the counter electrode active material layer 122 is kneaded together with a solvent and then drying the paint. In order to increase the density of the counter electrode active material layer 122, the counter electrode layer 120 (also referred to as a counter electrode plate) including the counter electrode active material layer 122 and the counter electrode current collector 121 may be pressed after drying.

In this embodiment, the electrode active material layer 112, the counter electrode active material layer 122, and the solid electrolyte layer 130 are maintained in the form of parallel plates. This makes it possible to suppress the occurrence of cracks or collapse due to bending. Note that the electrode active material layer 112, the counter electrode active material layer 122, and the solid electrolyte layer 130 may be combined and smoothly curved.

In the battery cell 200, the electrode current collector 111, the electrode active material layer 112, the counter electrode active material layer 122, and the counter electrode current collector 121 have the same shape and size, and the contours thereof coincide with each other as seen from the z-axis direction.

On the side surface 150 connecting the two principal surfaces of the battery 100 and parallel to the laminating direction of the battery 100, the electrode current collector 111, the electrode active material layer 112, the solid electrolyte layer 130, the counter electrode active material layer 122, and the counter electrode current collector 121 have their side surfaces exposed. The electrode current collector 111, the electrode active material layer 112, the solid electrolyte layer 130, the counter electrode active material layer 122, and the counter electrode current collector 121 are arranged so as not to overlap each other as seen from the direction perpendicular to the laminating direction. The exposed side surfaces may be covered with a lead terminal, an insulating member, or the like. That is, the expression "exposed" described above means that each layer laminated in the battery 100 does not cover the side surfaces of the other layers.

The side surface 150 is, for example, a polished cut surface, as will be described later. Therefore, as illustrated in Fig. 2, a side surface 113 of the electrode current collector 111, which is part of the side surface 150, is provided with a plurality of linear polishing patterns 111a. Likewise, a side surface 123 of the counter electrode current collector 121, which is part of the side surface 150, is provided with a plurality of linear polishing patterns 121a. The polishing patterns 111a and 121a are fine uneven polishing marks formed on the side surfaces 113 and 123. When the side surface 150 is a cut surface that is not polished, the side surfaces 113 and 123 may be provided with a plurality of linear patterns formed by cutting with a cutting blade, instead of the polishing patterns 111a and 121a, respectively.

The polishing patterns 111a and 121a extend in a direction inclined with respect to the laminating direction of the battery cells 200, when the side surfaces 113 and 123 are seen in plan view. To be more specific, the polishing patterns 111a and 121a extend in a direction perpendicular to the laminating direction of the battery cells 200 when the side surfaces 113 and 123 are seen in plan view. In the present specification, the expression "extending in the vertical direction" means "extending in a substantially vertical direction". For example, an angle formed by the laminating direction and the extending direction of the polishing patterns 111a and 121a is greater than or equal to 85° and less than or equal to 90°.

When the side surfaces 113 and 123 are seen in plan view, the angle formed by the laminating direction and the extending direction of the polishing patterns 111a and 121a may be greater than or equal to 45° and less than or equal to 90°.

When the side surface 150 is polished, particularly noticeable polishing marks are formed in the electrode current collector 111 and the counter electrode current collector 121, which are formed of a metal foil or the like. The side surfaces of the electrode active material layer 112, the counter electrode active material layer 122, and the solid electrolyte layer 130 may also be provided with polishing patterns extending in the direction inclined with respect to the laminating direction of the battery cells 200.

### [Method for Manufacturing Battery]

Next, a method for manufacturing the battery 100 according to this embodiment will be described. Fig. 3 is a flowchart illustrating an example of the method for manufacturing a battery according to this embodiment.

First, a laminate 300 is formed in a laminate formation step (step S11). Then, the laminate 300 is cut to form a cut surface 150a in a cutting step (step S12).

Fig. 4 is a perspective view for explaining a laminating step and the cutting step. Fig. 5 is a plan view of a laminate 100a formed in the cutting step. Fig. 6 is a sectional view of the laminate 100a formed in the cutting step. Note that Fig. 4 illustrates a state after the laminate 300 is cut in the cutting step. In the present specification, the side surfaces of each layer are hatched in perspective views such as Fig. 4, as in the sectional view, for better visibility. This, however, does not mean that hatched patterns are provided on the side surfaces of each layer. Fig. 5 is a plan view of the cut surface 150a as seen from the front. Fig. 6 illustrates a cross section taken along the line VI-VI of Fig. 5.

As illustrated in Fig. 4, the laminate 300 has a battery cell 400 having a structure in which an electrode layer 110, a solid electrolyte layer 130, and a counter electrode layer 120 are laminated in this order. To be more specific, the laminate 300 includes a plurality of laminated battery cells 400. The laminate 300 and the battery cell 400 have the same laminate structure as that of the battery 100 and the battery cell 200 described above, and thus detailed description thereof will be omitted. In the example illustrated in the drawing, the number of the battery cells 400 included in the laminate 300 is two, but the present disclosure is not limited thereto. For example, the number of the battery cells 400 included in the laminate 300 may be one, or more than or equal to three.

In the laminate formation step, an electrode current collector 111, an electrode active material layer 112, the solid electrolyte layer 130, a counter electrode active material layer 122, and a counter electrode current collector 121 are sequentially laminated in this order along the z-axis direction, for example, to form the battery cell 400. For example, the battery cell 400 is formed by coating surfaces of the current collectors or each layer with a paste-like paint in which materials of the electrode active material layer 112, the solid electrolyte layer 130, and the counter electrode active material layer 122 are kneaded together with a solvent and then drying the paint. Examples of the coating method for forming the electrode active material layer 112, the counter electrode active material layer 122, and the solid electrolyte layer 130 include, but are not limited to, screen printing, die coating, spraying, gravure printing, and the like.

Next, the battery cells 400 thus formed are laminated. For example, a conductive adhesive or the like is applied to one principal surface of the battery cell 400, and a plurality of battery cells 400 are joined with the conductive adhesive or the like. Thus, the laminate 300 is formed.

In the cutting step, as illustrated in Fig. 4, the laminate 300 is cut so as to collectively cut the electrode layer 110, the solid electrolyte layer 130, and the counter electrode layer 120. Thus, the cut surface 150a is formed. Therefore, in the cutting step, the laminate 300 is cut at a position passing through the two upper and lower principal surfaces of the laminate 300.

In the cutting step, for example, the laminate 300 is cut by shearing the laminate 300 with a cutting blade 500. In the cutting step, the laminate 300 is cut from above the principal surface of the laminate 300, for example, so that the cutting blade 500 advances along the laminating direction. That is, when the laminate 300 is set as a reference, the cutting blade 500 passes through the two upper and lower principal surfaces of the laminate 300 and moves in a direction parallel to the laminating direction of the laminate 300. Note that, when the laminate 300 is set as a reference, the cutting blade 500 may pass through the two upper and lower principal surfaces of the laminate 300 and move in a direction inclined with respect to or perpendicular to the laminating direction of the laminate 300.

By cutting the laminate 300, the laminate 100a is formed, including battery cells 200a and having the cut surface 150a illustrated in Figs. 5 and 6.

By cutting the laminate 300 in the cutting step, each layer of the battery cell 400 is crushed, and a pattern is formed on the cut surface 150a, in which a part of each layer of the battery cell 200a is oriented so as to be shifted in the moving direction of the cutting blade 500, as illustrated in Fig. 5. At least part of this pattern is due to a deposit 160 described below. On the cut surface 150a, the electrode current collector 111, the electrode active material layer 112, the solid electrolyte layer 130, the counter electrode active material layer 122, and the counter electrode current collector 121 are exposed. As illustrated in Fig. 6, the deposit 160 (partially not illustrated in Fig. 5), which is generated by cutting the laminate 300 and causes short-circuiting of the battery, adheres to the cut surface 150a. The deposit 160 is made of, for example, a material constituting at least one of the electrode current collector 111, the electrode active material layer 112, the solid electrolyte layer 130, the counter electrode active material layer 122, and the counter electrode current collector 121. The deposit 160 is cutting powder generated by crushing the laminate 300 by shearing. The deposit 160 may include in-process foreign matter adhered in the cutting process. Since the deposit 160 generated from the current collector and the active material layer is conductive, the electrode layer 110 and the counter electrode layer 120 are electrically connected through the deposit 160, thus forming minute conductive paths. The deposit 160 adhered to the cut surface 150a increases the chance of short-circuiting. Therefore, in this embodiment, the deposit 160 is removed in a cleaning step to be described later.

Next, the cut surface 150a is polished in a polishing step (step S13). Since the deposit 160 is generated by crushing due to shearing, the deposit 160 bites into the battery cell 200a at the cut surface 150a as illustrated in Fig. 6. In other words, the deposit 160 is often connected to the battery cell 200a. Therefore, the deposit 160 is not easily detached from the cut surface 150a. For this reason, the deposit 160 is scraped off the cut surface 150a by polishing the cut surface 150a.

Fig. 7 is a diagram for explaining a polishing direction in the polishing step. In Fig. 7, illustration of the deposit 160 is omitted. Fig. 7 is a plan view of the cut surface 150a.

As illustrated in Fig. 7, in the polishing step, polishing is performed along a polishing direction D2 inclined at an angle θ with respect to a laminating direction D1 of the laminate 100a. The angle θ is an angle formed by the laminating direction D1 and the polishing direction D2 when the cut surface 150a is seen in plan view. The angle θ is not particularly limited, and may be greater than or equal to 45° and less than or equal to 90° from the viewpoint of suppressing peeling of each layer in the battery cell 200a. Further, in the polishing step, the cut surface 150a may be polished along the polishing direction D2 that is perpendicular to the laminating direction D 1 of the laminate 100a. This substantially eliminates frictional force applied to the end of each layer in the battery cell 200a in the laminating direction of the laminate 100a. Thus, the peeling of each layer in the battery cell 200a can be significantly suppressed. In the present specification, a vertical direction means a substantially vertical direction, and the angle θ is greater than or equal to 85° and less than or equal to 90°, for example.

Fig. 8A is a perspective view for explaining an example of a polishing method in the polishing step. Fig. 8B is a top view for explaining an example of the polishing method in the polishing step. Figs. 8A and 8B illustrate a state where a polishing member 600 is partially cut. Fig. 8B is a plan view of the laminate 100a as seen along the laminating direction. In Fig. 8B, for better visibility, the deposit 160 is hatched as in the sectional view.

As illustrated in Figs. 8A and 8B, in the polishing step, the cut surface 150a is polished by sliding the polishing member 600 such as a polishing tape, for example, along the cut surface 150a. To be more specific, first, the cut surface 150a is pressed against the polishing member 600 with such pressure that the laminate 100a does not deform or bend. The polishing member 600 may be pressed against the cut surface 150a. Then, the cut surface 150a is polished by sliding one of the laminate 100a and the polishing member 600 along the polishing direction D2 perpendicular to the laminating direction D1. Alternatively, both the laminate 100a and the polishing member 600 may be slid in opposite directions along the polishing direction D2.

The polishing member 600 is not particularly limited as long as the member is a tool for polishing. The polishing member 600 is a member such as a polishing tape, polishing paper, or polishing cloth whose surface is coated with an abrasive, for example. The polishing member 600 may be at least partially wound around a roll.

In the polishing, depending on the adhesion condition of the deposit 160, the pressure and angle θ for pressing the polishing member 600 against the cut surface 150a, the grain size of the abrasive (in other words, the roughness of the polishing member 600), the speed and frequency of sliding, and the like are adjusted.

By polishing the cut surface 150a of the laminate 100a, a plurality of linear polishing patterns extending along the polishing direction D2 are formed on the cut surface 150a. For example, since the polishing direction D2 is perpendicular to the laminating direction D1 as described above, the polishing patterns 111a and 121a as illustrated in Fig. 2 are formed on the side surfaces of the electrode current collector 111 and the counter electrode current collector 121.

Fig. 9 is a sectional view illustrating a state of the deposit 160 after the polishing step. As illustrated in Fig. 9, through the polishing step, the deposit 160 that have bitten into the cut surface 150a is scraped off the cut surface 150a by polishing. This makes it easier to remove the deposit 160 in the subsequent cleaning step.

Next, the deposit 160 adhering to the cut surface 150a is removed in the cleaning step (step S14). Thus, the battery 100 having the side surface 150 illustrated in Fig. 1 is obtained. That is, the laminate 100a including the battery cells 200a after the cleaning step is the battery 100 including the battery cells 200, and the cut surface 150a after the cleaning step is the side surface 150.

The cleaning step includes, for example, a first removal step of removing the deposit 160 in a contact manner. In the first removal step, the deposit 160 adhering to the cut surface 150a is removed by bringing a removal member for removing the deposit 160 into contact with the cut surface 150a and the deposit 160. Thus, the removal member comes into direct contact with the deposit 160, making it possible to realize high removal efficiency.

The first removal step includes, for example, wiping off the deposit 160 adhering to the cut surface 150a. Fig. 10A is a perspective view for explaining an example of a cleaning method in the first removal step. Fig. 10B is a top view for explaining an example of the cleaning method in the first removal step. Figs. 10A and 10B illustrate a state where a wiping member 700 is partially cut. Fig. 10B is a plan view of the laminate 100a as seen along the laminating direction. In Fig. 10B, for better visibility, the deposit 160 is hatched as in the sectional view.

As illustrated in Figs. 10A and 10B, in the first removal step, the deposit 160 adhering to the cut surface 150a is wiped off by sliding the wiping member 700 such as a non-woven fabric along the cut surface 150a, for example. Thus, the deposit 160 comes into contact with the wiping member 700 and is collected, and the deposit 160 adhering to the cut surface 150a is efficiently removed. To be more specific, first, the cut surface 150a is pressed against the wiping member 700 with such pressure that the laminate 100a does not deform or bend. The wiping member 700 may be pressed against the cut surface 150a. Then, the deposit 160 adhering to the cut surface 150a is wiped off by sliding one of the laminate 100a and the wiping member 700 along a wiping direction D3 perpendicular to the laminating direction D1. Alternatively, both the laminate 100a and the wiping member 700 may be slid in opposite directions along the wiping direction D3. Thus, the frictional force applied to the cut surface 150a during wiping is hardly applied in the laminating direction of the laminate 100a. As a result, peeling of each layer of the battery cell 200a can be significantly suppressed.

The wiping member 700 is not particularly limited as long as the member is a tool capable of catching and wiping off powder or the like. The wiping member 700 is, for example, a non-woven fabric, cloth, film, or the like. Among these, the wiping member 700 may be a non-woven fabric from the viewpoint of being excellent in the ability to capture and retain the deposit 160 and to efficiently remove the deposit 160. By using the non-woven fabric, the deposit 160 is entangled in the non-woven fabric. The wiping member 700 may be at least partially wound around a roll.

Note that the wiping direction D3 is not limited to the direction perpendicular to the laminating direction D1, and the wiping may be performed in any wiping direction D3.

The first removal step may also include sticking an adhesive member to the cut surface 150a and peeling off the adhesive member so that the deposit 160 adheres to the adhesive member. Thus, the deposit 160 can be captured by the adhesive member, and the deposit 160 adhering to the cut surface 150a can be removed. Moreover, the deposit 160 can be removed simply by sticking and peeling off the adhesive member without sliding the adhesive member on the cut surface. Thus, damage to the laminate 100a can be suppressed. The adhesive member is not particularly limited as long as the member is a tool capable of sticking to the deposit 160. The adhesive member is a member such as an adhesive tape having a surface coated with an adhesive.

The first removal step may also include sweeping off the deposit 160 adhering to the cut surface 150a with a sweeping member such as a sweeper or a brush.

In the first removal step, the deposit 160 may be removed by one method or by a plurality of methods.

The cleaning step may include a second removal step of removing the deposit 160 by a non-contact method in which the cut surface 150a does not comes into contact with any object. The second removal step includes, for example, at least one of blowing gas onto the cut surface 150a and sucking the deposit 160 adhering to the cut surface 150a. Fig. 11 is a plan view and a sectional view for explaining the second removal step. To be more specific, Fig. 11(a) is a plan view when the cut surface 150a is seen from above. Fig. 11(b) illustrates a cross section taken along the line XIb-XIb of Fig. 11(a). Note that Fig. 11(a) is a perspective view of the inside of a foreign matter suction nozzle. In Fig. 11(a), for better visibility, the deposit 160 is hatched as in the sectional view. Fig. 11(b) illustrates a state where the deposit 160 adhering to the cut surface 150a is removed from the state illustrated in Fig. 11(a).

As illustrated in Fig. 11(a)(b), in the second removal step, a gas injection nozzle 810 is used, for example, to blow gas onto the cut surface 150a. The gas injection nozzle 810 is arranged, for example, at a position on an extension of the cut surface 150a in a direction parallel to the cut surface 150a or at a position obliquely above the cut surface 150a. Here, the term "above" means the side of the cut surface 150a opposite to the laminate 100a side. Moreover, from the viewpoint of efficiently removing the deposit 160, the gas injection nozzle 810 blows gas along the laminating direction of the laminate 100a, for example.

The gas injection nozzle 810 is, for example, a nozzle connected to a gas cylinder, a gas tank, a compressor, or the like. The gas to be blown may be any gas that does not react with the constituent material of the laminate 100a, and is, for example, inert gas such as argon or nitrogen, dry air, or the like. The dry air has a dew-point temperature of lower than or equal to -60°C, for example.

The gas blown from the gas ejection nozzle may be an ionized gas 910. The ionized gas 910 neutralizes the charged deposit 160 to reduce the adhesion force. Thus, the cleaning effect can be further improved.

In the second removal step, the foreign matter suction nozzle 820 is used to suck the deposit 160 to which the gas is blown. The foreign matter suction nozzle 820 is arranged, for example, at a position on an extension of the cut surface 150a in a direction parallel to the cut surface 150a, that is, a position facing the gas injection nozzle 810 across the cut surface 150a. Alternatively, the foreign matter suction nozzle 820 may be arranged obliquely below the cut surface 150a. Here, the term "below" means the laminate 100a side of the cut surface 150a. Moreover, from the viewpoint of efficiently removing the deposit 160, the foreign matter suction nozzle 820 sucks the deposit 160 along the laminating direction of the laminate 100a, for example.

The foreign matter suction nozzle 820 is, for example, a nozzle connected to a suction machine or the like.

Besides the arrangement described above, the foreign matter suction nozzle 820 may be installed in an ion gas space 900 filled with the ionized gas 910 . A flow of the ionized gas 910 sucked neutralizes the charged deposit 160 to reduce the adhesion force. Thus, the cleaning effect can be further improved.

Accordingly, by using the gas injection nozzle 810 and the foreign matter suction nozzle 820, the deposit 160 can be efficiently removed. Further, in the second removal step, the deposit 160 is removed by the non-contact method. Thus, the possibility of damaging the laminate 100a is low, and the reliability of the manufactured battery 100 can be improved. Note that the deposit 160 may be removed using only one of the gas injection nozzle 810 and the foreign matter suction nozzle 820, depending on the adhesion condition of the deposit 160.

The method for removing the deposit 160 in the non-contact manner is not limited to the above example. For example, the deposit 160 may be removed by vibrating the laminate 100a with a vibrator or the like to shake off the deposit 160 from the cut surface 150a.

In the cleaning step, only one of or both of the first and second removal steps may be performed.

As described above, the method for manufacturing the battery 100 according to this embodiment includes the cutting step of cutting the laminate 300 to form the cut surface 150a. The method for manufacturing the battery 100 further includes the cleaning step of removing the deposit 160 adhering to the cut surface 150a of the laminate 100a, which is formed by cutting the laminate 300.

By cutting in the cutting step, the end face positions of the layers in the laminate 300 can be aligned, and thus short-circuiting can be suppressed. In addition, the end portion of the laminate 300 does not easily function as a battery, and the capacity density of the manufactured battery 100 can be increased by cutting the end portion. By cutting the laminate 300 into a desired size, the capacity accuracy of the battery 100 can also be improved. On the other hand, the conductive deposit 160 derived from the material of each layer in the battery cell 200a adheres to the cut surface 150a of the laminate 100a formed by the cutting step. Therefore, the deposit 160 tends to form minute conductive paths between the electrode layer 110 and the counter electrode layer 120. Since the deposit 160 is removed through the cleaning step, it is possible to suppress the occurrence of short-circuiting due to the formation of such minute conductive paths. Therefore, a highly reliable battery 100 can be manufactured.

The method for manufacturing the battery 100 may also include the polishing step of polishing the cut surface 150a before the cleaning step. The deposit 160 generated by cutting the laminate 300 is likely to bite into the cut surface 150a. However, the deposit 160 that have bitten into the cut surface 150a is scraped off by polishing the cut surface 150a. Therefore, the deposit 160 is more easily removed. Thus, the reliability of the manufactured battery 100 can be further improved.

### (Other Embodiments)

The battery and the method for manufacturing a battery according to the present disclosure have been described above based on the embodiments, but the present disclosure is not limited to these embodiments. Variations of embodiments and modifications that would be conceived by those skilled in the art, and other forms constructed by combining some of the constituent components in the embodiments are also included in the scope of the present disclosure without departing from the gist of the present disclosure.

For example, the polishing step is performed in the above embodiment, but the present disclosure is not limited thereto. Depending on the adhesion condition of the deposit 160, the cleaning step may be performed after the cutting step without performing the polishing step.

In the above embodiment, the formation of one side surface 150 of the battery 100 has been described. However, side surfaces other than the side surface 150 of the battery 100 may be formed in the same manner as the side surface 150. For example, all side surfaces of the battery 100 may be cut surfaces formed by the manufacturing method described above.

In the above embodiment, the plurality of battery cells 200 are laminated so as to be electrically connected in series in the battery 100. However, the present disclosure is not limited thereto. A plurality of battery cells 200 may be laminated so as to be electrically connected in parallel. In this case, the plurality of battery cells 200 are laminated side by side along the z-axis while interchanging the order of the layers included in the battery cells 200. In other words, adjacent battery cells 200 are laminated such that those of the same polarity are electrically connected to each other.

Various changes, replacement, addition, omission, and the like can be made to the above embodiment within the scope of claims and equivalent thereof.

### Industrial Applicability

The battery according to the present disclosure can be used as a battery for electronic devices, electric appliances, electric vehicles, and the like.

### Reference Signs List

100 battery
100a, 300 laminate
110 electrode layer
111 electrode current collector
111a, 121a polishing pattern
112 electrode active material layer
113, 123, 150 side surface
120 counter electrode layer
121 counter electrode current collector
122 counter electrode active material layer
130 solid electrolyte layer
150a cut surface
160 deposit
200, 200a, 400 battery cell
500 cutting blade
600 polishing member
700 wiping member
810 gas injection nozzle
820 foreign matter suction nozzle
900 ion gas space
910 ionized gas
D1 laminating direction
D2 polishing direction
D3 wiping direction

## Claims

1. A method for manufacturing a battery comprising:
a cutting step of forming a cut surface by cutting a laminate having a battery cell having a structure in which an electrode layer, a solid electrolyte layer, and a counter electrode layer are laminated in this order so as to collectively cut the electrode layer, the solid electrolyte layer, and the counter electrode layer; and
a cleaning step of removing a deposit adhering to the cut surface, the deposit being generated by cutting the laminate in the cutting step.

2. The method for manufacturing a battery according to claim 1 further comprising:
a polishing step of polishing the cut surface before the cleaning step.

3. The method for manufacturing a battery according to claim 2, wherein
in the polishing step, the cut surface is polished along a direction perpendicular to the laminating direction of the laminate.

4. The method for manufacturing a battery according to any one of claims 1 to 3, wherein
the cleaning step includes a first removal step of removing the deposit in a contact manner.

5. The method for manufacturing a battery according to claim 4, wherein
the first removal step includes wiping off the deposit adhering to the cut surface.

6. The method for manufacturing a battery according to claim 5, wherein
in the first removal step, the deposit adhering to the cut surface is wiped off using a non-woven fabric.

7. The method for manufacturing a battery according to any one of claims 4 to 6, wherein
the first removal step includes sticking an adhesive member to the cut surface and peeling off the adhesive member so that the deposit adheres to the adhesive member.

8. The method for manufacturing a battery according to any one of claims 1 to 7, wherein
the cleaning step includes a second removal step including at least one of blowing gas onto the cut surface and sucking the deposit adhering to the cut surface.

9. A battery comprising:
a battery cell having a structure in which an electrode layer, a solid electrolyte layer, and a counter electrode layer are laminated in this order, wherein
the electrode layer includes an electrode current collector and an electrode active material layer positioned between the electrode current collector and the solid electrolyte layer, and
a plurality of linear patterns are provided on a side surface of the electrode current collector, the patterns extending in a direction inclined with respect to a laminating direction of the battery cell when the side surface of the electrode current collector is seen in plan view.

10. The battery according to claim 9, wherein
when the side surface of the electrode current collector is seen in plan view, an angle formed by the laminating direction of the battery cell and an extending direction of the plurality of linear patterns is greater than or equal to 45° and less than or equal to 90°.

11. The battery according to claim 9, wherein
the plurality of linear patterns extend in a direction perpendicular to the laminating direction of the battery cell when the side surface of the electrode current collector is seen in plan view.

12. The battery according to any one of claims 9 to 11, wherein
the plurality of linear patterns are polishing patterns.
